# EUROPEAN PATENT SPECIFICATION

(11) **EP 2 950 663 B1**
(45) Date of publication and mention of the grant of the patent: **23.05.2018**
(21) Application number: 14746441.6
(22) Date of filing: 30.01.2014
(51) Int. Cl.: A23K 50/75, A23K 50/30, A23K 10/10, A01N 45/00, A23K 20/168, A23K 50/10, A23K 30/10, A23K 50/20, A23K 30/15, A23K 20/184

(54) **METHODS TO INCREASE SILAGE QUALITY IN CROPS**
VERFAHREN ZUR ERHÖHUNG DER SILAGEQUALITÄT IN NUTZPFLANZENKULTUREN
PROCÉDÉS POUR ACCROÎTRE LA QUALITÉ D'ENSILAGE DE CULTURES

(30) Priority: 31.01.2013 US 201361759018 P
(43) Date of publication of application: 09.12.2015
(73) Proprietor: Valent BioSciences LLC, Liberty, IL 60048 (US)
(72) Inventor: KAISER, Roger, Libertyville, IL 60048 (US); SILVERMAN, Paul, Libertyville, IL 60048 (US); WARGO, Jim, Libertyville, IL 60048 (US)
(74) Representative: Denny, Sophy H.
(86) International application number: PCT/US2014/013762
(87) International publication number: WO 2014/120879

(56) References cited:
- GB-A- 1 583 702
- US-A- 2 943 938
- US-A- 4 154 596
- US-A1- 2010 272 853
- US-A1- 2010 272 853
- US-B2- 7 951 995
- P.C. BEUKES ET AL: "Estimating greenhouse gas emissions from New Zealand dairy systems using a mechanistic whole farm model and inventory methodology", ANIMAL FEED SCIENCE AND TECHNOLOGY, vol. 166-167, 1 June 2011 (2011-06-01), pages 708-720, XP055290646, AMSTERDAM, NL ISSN: 0377-8401, DOI: 10.1016/j.anifeedsci.2011.04.050

## Description

This application claims the benefit of U.S. Provisional Application Serial Number 61/759,018 filed January 31, 2013.

### FIELD OF THE INVENTION

The present invention is generally directed to methods for increasing the feed quality of silage by the application of an effective amount of at least one gibberellin to a silage crop.

### BACKGROUND OF THE INVENTION

Forages, which are composed of hays and silage are important feedstock for both milk-producing and meat-producing animals. For dairy cattle, about 40 percent of their ration should be forage, and variation in forage digestibility is an important determinant of milk production (Stokes, 2002, Advances in Dairy Technology 14:207).

Silage is produced from forage plants by chopping above-ground plant biomass with a harvester. Suitable plants for silage may be forage crops such as *Zea mays* (corn), cereals, pasture grasses, legumes, such as clover or alfalfa and any other plants suitable for making silage. Silage production is generally optimal when plants are harvested at 30-40% dry matter, which ensures optimal fermentation. The chopped plant material, also known as haylage, is subjected to anaerobic fermentation in a silo, thus preserving its nutrients and nutritional quality.

Nutritional quality of silage is determined by several parameters which are collectively known as digestibility. Digestibility is the relative amount of nutrients (nutritive substances), which are absorbed by the animal after feeding. Parameters that describe the digestibility of forages are Neutral Detergent Fiber (NDF), Acid Detergent Fiber (ADF) and Total Digestible Nutrients as percent of Dry Matter (TDN).

Neutral Detergent Fiber ("NDF") is a measure of fiber after digestion in a neutral detergent as an aid in determining quality and digestibility of forages. High NDF is desirable.

Acid Detergent Fiber ("ADF") is the less digestible portion of the forage, containing cellulose, lignin and heat damaged protein. ADF is closely related to the digestibility of forages. Lower ADF implies the forage is more digestible. A low concentration of ADF is desirable.

Total Digestible Nutrients as percent of Dry Matter ("TDN") is the total amount of digestible nutrients measured by the available energy of the forage and energy requirements of animals. This is a measure of forage digestibility. A high TDN is desirable.

"Starch" describes the starch content of the forage, along with digestible components of the fiber. Starch is the majority of energy in some forages, such as *Zea mays* (corn). A higher starch content is desirable.

Dry Matter ("DM") is the total weight of forage minus the weight of water in the forage, expressed as a percentage.

Many approaches have been taken to increase the digestibility or quality of silage but most rely on agronomic factors. Forage quality is influenced by species selection, level of fertilization, maturity of the crop, plant part selected and, in corn, the relative development of the ear. Plant breeding of forages for example, has focused on lignin content which is a quality factor that is a negative indicator for forage digestibility. Genetic improvement to decrease lignin content was postulated to increase digestibility of forages, but it resulted in significant yield decreases (Pedersen, et al., 2005, Impact of reduced lignin on plant fitness Crop Sci. 45:812).

Accordingly, there is a need for improved methods to increase the feed quality of silage. In the past, plant growth regulators have been tested for their ability to improve silage quality. In Bidlack and Buxton (1995; J. Plant Growth Regul. 14:1-7), GA3 was tested to determine its ability to alter *in vitro* digestible dry matter ("IVDDM") in forage grasses and legumes. Although GA3 applications showed a dose-dependent increase in growth and dry weight of alfalfa and smooth bromegrass, IVDDM decreased in these same studies. Thus, the authors concluded that GA3 application decreased digestibility of forages and legumes. Therefore, there is a need for new methods to increase the feed quality of silage.

US 2010/0272853 A1 relates to a method of increasing the milk and/or meat quantity of silage-fed animals comprising treating plants for producing silage with at least one strobilurin compound.

US 2 943 938 A relates to improved animal feeds for improving the growth of animals, particularly poultry. Especially, to nutritionally balanced animal feed compositions containing gibberellin.

GB 1 583 702 A relates to a method of treating cereal plants by the application of gibberellin to increase the yield of harvestable grain.

### SUMMARY OF THE INVENTION

In one aspect, the present invention is directed to a method according to claim 12, for increasing the feed quality of silage through the application of an effective amount of at least one gibberellin to a silage crop.

### DETAILED DESCRIPTION OF THE INVENTION

Applicants unexpectedly found increased qualities in meat and milk from animals that were fed silage that had been treated with at least one gibberellin.

In one embodiment, the invention is directed to methods of increasing the quantity of milk or meat produced by a milk-producing animal or a meat-producing animal comprising: 1) applying from 1 ± 10% to 30 ± 10% grams of at least one gibberellin compound per hectare to a plant; 2) producing silage from the plant; and 3) feeding the milk-producing animal or the meat-producing animal the silage made from the plant wherein the silage displays an increased energy content and enhanced digestibility.

In another embodiment, the invention relates to a method of increasing the milk quantity of silage-fed milk-producing animals wherein in step 3) the silage is fed to milk-producing animals.

In an embodiment, the invention relates to a method of increasing the meat quantity of silage-fed meat-producing animals wherein in step 3) the silage is fed to meat-producing animals.

Preferably, the gibberellin is gibberellin 1, gibberellin 3, gibberellin 4, gibberellin 7, or a combination thereof. In a more preferred embodiment, the gibberellin is gibberellin 3 or a combination of gibberellin 4 and 7. In a most preferred embodiment, the gibberellin is gibberellin 3.

In another embodiment, the plant that the gibberellin is applied to is corn, grass, sorghum, oat, rye, clover, vetch, alfalfa or mixed grasses. In a preferred embodiment, the plant is corn.

In a further embodiment, the milk-producing animal or the meat-producing animal is cattle, sheep, swine, horses, poultry or goats. In a preferred embodiment, the milk-producing animal is cattle, sheep, or goats. In a more preferred embodiment, the milk-producing animal is cattle. In a preferred embodiment, the meat-producing animal is cattle, sheep, swine, horses, poultry or goats. In a more preferred embodiment, the meat-producing animal is cattle.

In a preferred embodiment, the at least one gibberellin compound is applied in an amount of from 3 ± 10% to 20 ± 10% grams of gibberellin per hectare and more preferably from 6 ± 10% to 16 ± 10% grams of gibberellin per hectare. In a most preferred embodiment, the amount of gibberellin is from 8 ± 10% to 16 ± 10% grams of gibberellin per hectare. In a preferred embodiment, gibberellin 3 is applied at from 1 ± 10% to 30 ± 10%, preferably from 3 ± 10% to 20 ± 10%, from 6 ± 10% to 16 ± 10%, and from 8 ± 10% to 16 ± 10% grams (from 3.2 ± 10% to 6.4 ± 10% grams of gibberellin 3) per hectare of silage.

In another embodiment, the gibberellin is applied to the plants with at least one herbicide, fungicide, insecticide, fertilizer or plant growth regulator that is not a gibberellin. In a preferred embodiment, the gibberellin is applied with another plant growth regulator.

In another embodiment, the herbicides include but are not limited to, glyphosate, mesotrione, halosulfuron, saflufenacil or dicamba.

In a further embodiment, the fungicides include but are not limited to tetraconazole, metconazole, a strobilurin, or a combined strobilurin-azole product.

In another embodiment, the insecticides include but are not limited to methylparathion, bifenthryn, esfenvalerate, lorsban, carbaryl or lannate.

In yet another embodiment, the foliar fertilizers include but are not limited to CoRoN (available from Helena Chemical), a controlled-release nitrogen, or BioForge (available from Stoller USA), which is largely N,N'-diformyl urea, or other micro nutrient-containing sprays.

In an embodiment, the plant growth regulators include but are not limited to, abscisic acid, aminoethoxyvinylglycine, 6-benzyladenine, jasmonic acid, napthylacetic acid or salicylic acid.

In another embodiment, the invention is directed to methods for improving silage quality of cereal crops comprising applying from 1 ± 10% to 30 ± 10% grams of at least one gibberellin to cereal crops at an early vegetative growth stage wherein the silage displays increased energy content and enhanced digestibility.

In a preferred embodiment, the gibberellin is gibberellin 1, gibberellin 3, gibberellin 4, gibberellin 7, or a combination thereof. In a more preferred embodiment, the gibberellin is gibberellin 3 or a combination of gibberellin 4 and 7. In a most preferred embodiment, the gibberellin is gibberellin 3.

In another embodiment, the cereal crop is corn, grass, sorghum, oat, rye, clover, vetch, alfalfa or mixed grasses.

In a preferred embodiment, the cereal crop is corn. In a further embodiment, the gibberellin is applied to the corn during V2 -V6 growth stages.

In yet another embodiment, a slow-release application of the gibberellin can be soil applied, either as a soil-directed spray, side-dressing, or in-furrow application at planting. In these applications, the gibberellin can be applied either alone or in combination with at least one herbicide, fungicide, insecticide, fertilizer, or another plant growth regulator. In a preferred embodiment, the gibberellin is applied to the plant or cereal crop by foliar application or application to soil.

Gibberellin treatment according to the present invention results in an increase in milk and/or meat quantity of animals fed with silage derived from plants treated with gibberellin prior to producing said silage.

According to the invention, the increase of the milk quantity, compared to the milk quantity obtained after the milk producing animals were fed with silage that was not derived from plants treated with gibberellic acid according to the invention, is at least 1 %, preferably at least 1.5%, and more preferably at least 2%.

According to the invention, the increase of the meat quantity, compared to the meat quantity obtained after the meat-producing animals were fed with silage that was not derived from plants treated with gibberellic acid according to the invention, is at least 1%, preferably at least 1.5%, and more preferably at least 2%.

In one embodiment according to the invention, the plant is selected from agricultural crops, silvicultural and horticultural plants, each in its natural or genetically modified form ("GM plants"). Such GM plants may have improved properties such as improved stress tolerance and resistance of the plants against biotic and abiotic stress factors such as herbicides, fungi, bacteria, viruses, insects, heat stress, cold stress, drought stress, ultraviolet ray stress and/or salt stress.

In one embodiment of the invention, the silage according to the invention used for increasing the milk quantity, is fed to cattle, preferably lactating dairy cattle.

In one embodiment of the invention, the silage according to the invention used for increasing the meat quantity, is fed to cattle, preferably beef cattle.

The gibberellins according to the invention can be prepared, for example, in the form of directly sprayable solutions, powders and suspensions or in the form of highly concentrated aqueous, oil or other suspensions, dispersions, emulsions, oil dispersions, pastes, dusts, compositions for spreading or granules, and be applied by spraying.

Aqueous spray solutions to be utilized in the present invention generally contain from about 0.01% to 0.5% (v/v) of a surface-active agent.

The surface active agent comprises at least one non-ionic surfactant. In general, the non-ionic surfactant may be any known non-ionic surfactant in the art. Suitable non-ionic surfactants are in general oligomers and polymers. Suitable polymers include alkyleneoxide random and block copolymers such as ethylene oxide-propylene oxide block copolymers (EO/PO block copolymers), including both EO-PO-EO and PO-EO-PO block copolymers; ethylene oxide-butylene oxide random and block copolymers, C2-6 alkyl adducts of ethylene oxide-propylene oxide random and block copolymers, C2-6 alkyl adducts of ethylene oxide-butylene oxide random and block copolymers, polyoxyethylene-polyoxypropylene monoalkylethers, such as methyl ether, ethyl ether, propyl ether, butyl ether or mixtures thereof; vinylacetate/vinylpyrrolidone copolymers; alkylated vinylpyrrolidone copolymers; polyvinylpyrrolidone; and polyalkyleneglycol, including the polypropylene glycols and polyethylene glycols. Other non-ionic agents are the lecithins; and silicone surface active agents (water soluble or dispersible surface active agents having a skeleton which comprises a siloxane chain e.g. Silwet L77.RTM.). A suitable mixture in mineral oil is Atplus™411 F.RTM.

Applicants have referred to corn developmental stages throughout the application as "V" stages. The "V" stages are designated numerically as V1, V2, V3, etc. In this identification system of V(n), (n) represents the number of leaves with visible collars. Each leaf stage is defined according to the uppermost leaf whose leaf collar is visible.

As used herein, "milk" refers to a liquid produced by female mammals. The exact composition of raw milk can vary significantly by species. Generally, it contains high amounts of saturated fat, protein and calcium. Milk can be processed in a great variety of ways, the products of which are called dairy products.

As used herein, "meat" is animal tissue used as food. The term meat typically refers to skeletal muscle and associated fat, but it may also refer to non-muscle organs, including lungs, livers, skin, brains, bone marrow and kidneys.

As used herein, "silage" is a certain type of storage forage. Generally, silage is being made from plants in a process called ensilage. During this process, plants or plant parts undergo anaerobic fermentation converting sugars to acids in the crop material making the forage preservable. Depending on the plants used, other names instead of silage are employed, e.g., oatlage for oats or haylage for alfalfa. Silage is widely used for feeding milk and meat-producing animals such as dairy and beef cattle.

As used herein, "increased energy content" refers to increased nutritional quality of the silage. As previously explained, this nutritional quality is determined by parameters such as NDF, ADF, and TDN and collectively referred to as digestibility.

As used herein, "early vegetative growth stage" refers to the growth stage that begins at germination and ends when the plant is 50% of the mature plant size.

As used herein, "producing silage" means that the plants are chopped/harvested and then the non-growing plant material is then subjected to anaerobic fermentation. The silage of the present invention is prepared for animals to eat.

As used herein, the term "plants" is to be understood as plants of economic importance. They are preferably selected from agricultural crops, silvicultural and horticultural (including ornamental) plants.

As used herein, an "enhanced" or "increased" quality means that the silage has more of the quality than the silage would have had it if it had not been treated by methods of the present invention.

As used herein, "effective amount" refers o the amount of the gibberellin that will increase the quantity of milk or meat produced by a milk-producing animal or a meat-producing animal or improve the quality of silage. The "effective amount" will vary depending on the gibberellin concentration, the plants being treated, the result desired, and the life stage of plants, among other factors. Thus, it is not always possible to specify an exact "effective amount." However, an appropriate "effective amount" in any individual case may be determined by one of ordinary skill in the art.

The disclosed embodiments are simply exemplary embodiments of the inventive concepts disclosed herein and should not be considered as limiting, unless the claims expressly state otherwise.

As used herein, all numerical values relating to amounts, weight percentages and the like are defined as "about" or "approximately" each particular value, namely, plus or minus 10% (±10%). For example, the phrase "at least 5% by weight" is to be understood as "at least 4.5% to 5.5% by weight." Therefore, amounts within 10% of the claimed values are encompassed by the scope of the claims.

The articles "a", "an" and "the" are intended to include the plural as well as the singular, unless the context clearly indicates otherwise.

The following examples are intended to illustrate the present invention and to teach one of ordinary skill in the art how to use the formulations of the invention. They are not intended to be limiting in any way.

### EXAMPLES

Field trials were conducted at various locations. Portions of the field were treated with RyzUp® Smartgrass (40% (w/v) GA3 (available from Valent BioSciences Corporation), while other parts of the field were not treated. RyzUp® Smartgrass applications were limited to applications between V3 and V6, with spray volumes for foliar applications ranging from 93.5-233.8 liters/ha (10-25 gallons/acre).

Trials were harvested using commercial equipment at standard timings for corn silage. Both RyzUp® Smartgrass and untreated areas of the field were harvested separately in order to obtain biomass yield (ton/ha (ton/acre)). Subsequently, the harvested plant material was used for producing silage.

Representative samples were taken for subsequent analysis. Forage was analyzed by standard methods to determine quality parameters including dry matter, crude protein, Acid Detergent Fiber (ADF), Neutral Detergent Fiber (NDF), and starch data. Calculations were included for moisture, adjusted crude protein, Total Digestible Nutrients (TDN), Net Energy for Lactation (NEL), Net Energy for Gain (NEG) and protein solubility. This information was then entered into the MILK 2006 University of Wisconsin Com Silage evaluation system. Calculations of the milk production, energy content and digestibility per ton of corn biomass were carried out using a calculation method described in the following references: Schwab, E. C., and R. D. Shaver. (2001); b) Schwab, EC et al. (2003); and c) Undersander, DJ et al.,(1993) Example 1

Modem corn hybrid varieties were grown in a field trial. RyzUp® Smartgrass (40% GA3) was applied at V4 growth stage at a rate of 3.2 g GA3/acre (8 g/ha). In this trial, silage quality data were analyzed for each variety and the means were used to calculate milk production (Table 1). Percent moisture, crude protein, ADF and NDF were decreased while TDN, starch, and milk production were increased.

| Table 1: Mean Silage quality parameters from corn silage | | | |
|---|---|---|---|
| Parameter | Control | RyzUp® Smartgrass | Percent Difference |
| % Moisture | 64.26 | 61.57 | -4.2 |
| Wet Tons | 20.57 | 19.76 | -3.9 |
| %CP | 10.27 | 8.50 | -17.2 |
| %ADF | 22.10 | 21.42 | -3.1 |
| %NDF | 42.76 | 41.60 | -2.7 |
| %Lignin | 56.76 | 55.31 | -2.6 |
| %TDN | 68.33 | 69.17 | 1.2 |
| %Starch | 27.50 | 32.08 | 16.7 |
| %Ash | 3.70 | 3.22 | -13.0 |
| %Fat | 2.34 | 2.44 | 4.3 |
| Milk (lbs/t) | 3078.00 | 3158.00 | 2.6 |

As is seen in Table 1, gibberellic acid treatment increased the digestibility (%TDN % of DM by +1.2%), the energy content (% NDF by -2.7%; a decrease in % NDF results in an increase of energy content); the starch by +16.7%, and the calculated milk production per ton of silage by +2.6%.

### Example 2

Corn grown in a field trial was treated at the V5 stage with RyzUp® Smartgrass (GA3 (w/v) 40%) at a rate of 6.4 g GA3/acre (16 g/ha). Treatments were made in a spray volume of 140.3 liters of water per hectare (15 gallons of water per acre) with added surfactant. The overall conditions of this trial were drought stress both before and following application.

| Table 2: Silage quality parameters from corn trial. | | | |
|---|---|---|---|
| Parameter | Control | RyzUp® Smartgrass | Percent Difference |
| % Moisture | 65.00 | 59.10 | -9.1 |
| %DM | 35.00 | 40.90 | 16.9 |
| %CP | 10.20 | 9.30 | -8.8 |
| %ADF | 27.80 | 22.40 | -19.4 |
| %NDF | 45.60 | 37.50 | -17.8 |
| %TDN | 67.90 | 73.30 | 8.0 |
| %Starch | 24.20 | 37.60 | 55.4 |
| %Ash | 4.10 | 2.40 | -41.5 |

As is seen in Table 2, gibberellic acid treatment increased the digestibility (%TDN by +8 %), the energy content (% NDF) by -17.8% (a decrease in % NDF results in an increase of energy content); and the starch by +55.4%. In this example, the changes in all of these parameters characterize silage with enhanced digestibility, which will yield more milk or meat per ton of silage.

## Claims

1. A method of increasing the quantity of milk or meat produced by a milk-producing animal or a meat-producing animal comprising: 1) applying from 1 ± 10% to 30 ± 10% grams of at least one gibberellin compound per hectare to a plant; 2) producing silage from the plant; and 3) feeding the milk-producing animal or the meat-producing animal the silage made from the plant wherein the silage displays an increased energy content and enhanced digestibility.

2. The method of claim 1 wherein the gibberellin is selected from the group consisting of gibberellin 1, gibberellin 3, gibberellin 4, gibberellin 7, and a combination thereof

3. The method of claim 2 wherein the gibberellin is gibberellin 3 or a combination of gibberellin 4 and 7.

4. The method of claim 1 wherein the plant is selected from the group consisting of corn, grass, sorghum, oat, rye, clover, vetch, alfalfa and mixed grasses.

5. The method of claim 4 wherein the plant is corn.

6. The method of claim 1 wherein the milk-producing animal or the meat-producing animal is selected from the group consisting of cattle, sheep, swine, horses, poultry and goats.

7. The method of claim 6 wherein the animal is cattle.

8. The method of claim 2 wherein the at least one gibberellin compound is applied in an amount of from 3 ± 10% to 20 ± 10% grams of gibberellin per hectare; preferably, wherein the amount is from 6 ± 10% to 16 ± 10% grams of gibberellin per hectare; or preferably, wherein the amount is from 8 ± 10% to 16 ± 10% grams of gibberellin per hectare.

9. The method of claim 1 wherein the gibberellin is applied with at least one herbicide, fungicide, insecticide, fertilizer or plant growth regulator that is not a gibberellin.

10. The method of claim 9 wherein the gibberellin is applied with a plant growth regulator other than a gibberellin.

11. The method of claim 1 wherein the gibberellin is applied by foliar application or application to soil.

12. A method of improving silage quality of cereal crops comprising applying from 1 ± 10% to 30 ± 10% grams of at least one gibberellin per hectare to cereal crops at an early vegetative growth stage wherein the silage displays increased energy content and enhanced digestibility.

13. The method of claim 12 wherein the cereal crop is corn and the gibberellin is applied to the corn during V2 -V6 growth stages.

## Patentansprüche

1. Verfahren zum Erhöhen der Menge an Milch oder Fleisch, die durch ein milchproduzierendes Tier oder ein fleischproduzierendes Tier produziert wird, umfassend:
1) Auftragen von 1 ± 10 % bis 30 ± 10 % Gramm mindestens einer Gibberellinverbindung pro Hektar auf eine Pflanze;
2) Produzieren von Silage aus der Pflanze; und
3) Füttern des milchproduzierenden Tieres oder des fleischproduzierenden Tieres mit der aus der Pflanze hergestellten Silage, wobei die Silage einen erhöhten Energiegehalt und verbesserte Verdaulichkeit aufweist.

2. Verfahren nach Anspruch 1, wobei das Gibberellin aus der Gruppe ausgewählt ist, die aus Gibberellin 1, Gibberellin 3, Gibberellin 4, Gibberellin 7 und einer Kombination davon besteht.

3. Verfahren nach Anspruch 2, wobei das Gibberellin Gibberellin 3 oder eine Kombination aus Gibberellin 4 und 7 ist.

4. Verfahren nach Anspruch 1, wobei die Pflanze aus der Gruppe ausgewählt ist, die aus Mais, Gras, Sorghum, Hafer, Roggen, Klee, Wicke, Alfalfa und gemischten Gräsern besteht.

5. Verfahren nach Anspruch 4, wobei die Pflanze Mais ist.

6. Verfahren nach Anspruch 1, wobei das milchproduzierende Tier oder das fleischproduzierende Tier aus der Gruppe ausgewählt ist, die aus Rindern, Schafen, Schweinen, Pferden, Geflügel und Ziegen besteht.

7. Verfahren nach Anspruch 6, wobei das Tier Rind ist.

8. Verfahren nach Anspruch 2, wobei die mindestens eine Gibberellinverbindung in einer Menge von 3 ± 10 % bis 20 ± 10 % Gramm Gibberellin pro Hektar aufgetragen wird; wobei die Menge vorzugsweise 6 ± 10 % bis 16 ± 10 % Gramm Gibberellin pro Hektar beträgt; oder wobei die Menge vorzugsweise 8 ± 10 % bis 6 ± 10% Gramm Gibberellin pro Hektar beträgt.

9. Verfahren nach Anspruch 1, wobei das Gibberellin mit mindestens einem Herbizid, Fungizid, Insektizid, Dünger oder Pflanzenwachstumsregulator, der kein Gibberellin ist, aufgetragen wird.

10. Verfahren nach Anspruch 9, wobei das Gibberellin mit einem anderen Pflanzenwachstumsregulator als einem Gibberellin aufgetragen wird.

11. Verfahren nach Anspruch 1, wobei das Gibberellin durch Blattanwendung oder Bodenauftrag aufgetragen wird.

12. Verfahren zum Verbessern der Silagequalität von Getreidearten, umfassend das Auftragen von 1 ± 10 % bis 30 ± 10 % Gramm mindestens eines Gibberellins pro Hektar auf Getreidearten in einer frühen vegetativen Wachstumsphase, wobei die Silage einen erhöhten Energiegehalt und verbesserte Verdaulichkeit aufweist.

13. Verfahren nach Anspruch 12, wobei die Getreideart Mais ist und das Gibberellin während der Wachstumsphasen V2-V6 auf den Mais aufgetragen wird.

## Revendications

1. Procédé d'augmentation de la quantité de lait ou de viande produite par un animal producteur de lait ou un animal producteur de viande, comprenant : 1) l'application de 1 ± 10 % à 30 ± 10 % grammes d'au moins un composé de gibbérelline par hectare à une plante ; 2) la production de fourrage à partir de la plante ; et 3) l'alimentation de l'animal producteur de lait ou de l'animal producteur de viande avec le fourrage produit à partir de la plante, dans lequel le fourrage présente une teneur énergétique augmentée et une digestibilité améliorée.

2. Procédé selon la revendication 1, dans lequel la gibbérelline est sélectionnée dans le groupe constitué de gibbérelline 1, gibbérelline 3, gibbérelline 4, gibbérelline 7, et une combinaison de celles-ci.

3. Procédé selon la revendication 2, dans lequel la gibbérelline est de la gibbérelline 3 ou une combinaison de gibbérelline 4 et 7.

4. Procédé selon la revendication 1, dans lequel la plante est sélectionnée dans le groupe constitué de maïs, herbe, sorgho, avoine, seigle, trèfle, vesce, luzerne et mélanges d'herbes.

5. Procédé selon la revendication 4, dans lequel la plante est du maïs.

6. Procédé selon la revendication 1, dans lequel l'animal producteur de lait ou l'animal producteur de viande est sélectionné dans le groupe constitué de bétail, moutons, porcs, chevaux, volaille et chèvres.

7. Procédé selon la revendication 6, dans lequel l'animal est du bétail.

8. Procédé selon la revendication 2, dans lequel l'au moins un composé de gibbérelline est appliqué dans une quantité de 3 ± 10 % à 20 ± 10 % grammes de gibbérelline par hectare ; de préférence, dans lequel la quantité est de 6 ± 10 % à 16 ± 10 % grammes de gibbérelline par hectare ; ou de préférence, dans lequel la quantité est de 8 ± 10 % à 16 ± 10 % grammes de gibbérelline par hectare.

9. Procédé selon la revendication 1, dans lequel la gibbérelline est appliquée avec au moins un herbicide, fongicide, insecticide, fertilisant ou régulateur de croissance de plante qui n'est pas une gibbérelline.

10. Procédé selon la revendication 9, dans lequel la gibbérelline est appliquée avec un régulateur de croissance de plante autre qu'une gibbérelline.

11. Procédé selon la revendication 1, dans lequel la gibbérelline est appliquée par application foliaire ou application au sol.

12. Procédé d'amélioration de la qualité de fourrage de céréales sur pied comprenant l'application de 1 ± 10 % à 30 ± 10 % grammes d'au moins une gibbérelline par hectare à des céréales sur pied à une étape de croissance végétative précoce, dans lequel le fourrage présente une teneur énergétique augmentée et une digestibilité améliorée.

13. Procédé selon la revendication 12, dans lequel la céréale sur pied est du maïs et la gibbérelline est appliquée au maïs pendant les étapes de croissance V2 à V6.
